# EUROPEAN PATENT APPLICATION

(11) **EP 1 468 815 A1**
(43) Date of publication of application: **20.10.2004**
(21) Application number: 04007291.0
(22) Date of filing: 26.03.2004
(51) Int. Cl.: B29D 31/50, B29D 31/51

(54) **Mold and method for forming shoe soles and shoe sole portions, and shoe soles and shoe sole portions obtained thereby**

(30) Priority: 15.04.2003 IT PD20030075
(71) Applicant: FRASSON S.R.L., 31037 LORIA (TV) (IT)
(72) Inventor: Frasson, Gilberto, 35018 San Martino di Lupari (Padova) (IT)
(74) Representative: Modiano, Guido, Dr.-Ing.

(57) **Abstract**

A mold (10) for providing shoe soles and shoe sole portions, comprising a lower plate (11) that forms, together with lateral containment portions (12) and with an upper closure piston (13), at least one shoe sole impression (14). The lower plate (11) and the lateral containment portions (12), when arranged so as to close onto the lower plate (11), form, along substantially mutually opposite parts of the perimeter of the at least one impression (14), corresponding undercut slots for supporting and locking laterally the outer edges of a preformed insole (16). The preformed insole (16) is provided with channels (22) that pass through its thickness and is obtained from a sheet of polymeric material.

## Description

The present invention relates to a mold for forming soles and sole portions of the multilayer type.

The present invention relates also to the soles and sole portions of the multilayer type provided with said mold and to the method for their production.

Currently there are various methods and devices for forming soles composed of multilayer mid-soles.

Typically, such soles are composed of a vulcanized rubber tread, which is formed for example separately at first, and of a mid-sole composed of a plurality of layers that are superimposed and mutually bonded by adhesive.

The tread and the mid-sole are then mutually bonded by adhesive.

The layers that compose the mid-sole are generally made of different materials, such as for example polyurethane and EVA.

These are materials that in order to adhere to each other must undergo various treatments, such as for example carding and spreading with primer.

A typical construction by adhesive bonding of a multilayer sole composed for example of a mid-sole with three layers, two outer layers made of polyurethane and one intermediate layer made of EVA, and a tread, provides for several steps.

The polyurethane insoles that will compose the outer layers are molded separately.

The insole that will constitute the intermediate layer is die-cut separately from a pre-carded EVA sheet and is deformed in order to make it assume the intended shape and thicknesses.

At this point it is necessary to prepare the polyurethane insole by carding it or spreading it with the primer in order to mate it with the intermediate insole by adhesive bonding and pressing.

Likewise, the second polyurethane insole is prepared and coupled to the previously formed pair, again by adhesive bonding and pressing.

At this point, the resulting mid-sole is coupled to the previously formed tread.

The problems that arise from this type of construction of a multilayer sole by adhesive bonding are substantially the many processing steps (mostly manual ones), which increase production costs, and the inaccuracies that can arise from adhesive bonding (off-centered insoles, inaccurate thicknesses, adhesive smudges, unreliable adhesive bonding, et cetera).

The aim of the present invention is to provide a mold for forming shoe soles and shoe sole portions that solves the above-noted drawbacks.

Within this aim, an object of the present invention is to provide a mold for forming shoe soles and shoe sole portions that allows to have optimum safety of the adhesion between the layers that compose said soles or sole portions.

Another object of the present invention is to provide a mold for forming shoe soles and shoe sole portions that allows to have a precise mutual positioning of the layers that compose said soles or sole portions.

A further object of the present invention is to provide a mold for forming shoe soles and shoe sole portions that allows to have optimum control over the thicknesses that compose said soles or sole portions.

Another object of the present invention is to provide a method for providing shoe soles and shoe sole portions that solves the drawbacks noted in known methods.

This aim and these and other objects that will become better apparent hereinafter are achieved by a mold for providing shoe soles and shoe sole portions, comprising a lower plate that forms, together with lateral containment portions and with an upper closure piston, at least one shoe sole impression, said mold being characterized in that said lower plate and said lateral containment portions, when arranged so as to close onto said lower plate, form, along substantially mutually opposite parts of the perimeter of said at least one impression, corresponding undercut slots for supporting and locking laterally the outer edges of a preformed insole obtained from a sheet of polymeric material, which is provided with channels that pass through its thickness.

Advantageously, the invention comprises the soles and the mid-soles provided by means of said mold.

Conveniently, the invention also comprises a method for forming shoe soles and shoe sole portions that comprises the steps of:
-- blanking an insole from a pre-carded sheet of polymeric material,
-- deforming said insole in order to assume the intended thicknesses,
-- spreading primer onto both sides of said insole,
-- positioning said insole thus deformed in said mold, so that it rests on said substantially flat portion of said step-like recess of said undercut slot, and so that the side abuts against said vertical lateral portion,
-- closing said mold and starting the pouring of at least one polymeric material,
-- once pouring has ended, waiting for a preset molding time,
-- opening said mold and extracting the molded product.

Further characteristics and advantages of the present invention will become better apparent from the following detailed description of a preferred but not exclusive embodiment thereof, illustrated by way of nonlimiting example in the accompanying drawings, wherein:
Figure 1 is a schematic transverse sectional view of a mold according to the invention, with a mid-sole shown therein;
Figure 2 is a sectional side view of a sole provided by means of a mold and a method according to the invention;
Figure 3 is a partially sectional plan view of the sole of Figure 2;
Figure 4 is an enlarged-scale view of a portion of mold with the insole made of polymeric material inserted therein;
Figure 5 is a schematic sectional view, taken along a transverse plane, of a mold according to a second embodiment of the invention, illustrating a mid-sole and a tread.

With reference to the figures, a mold for providing shoe soles and shoe sole portions is generally designated by the reference numeral 10.

The mold 10 is substantially of the type for molding by pouring.

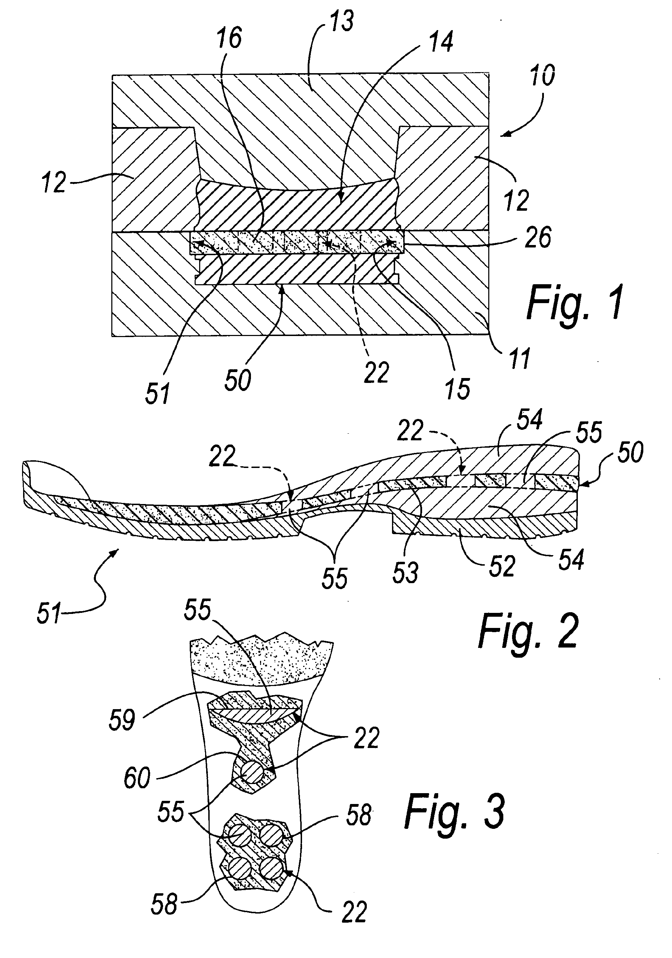

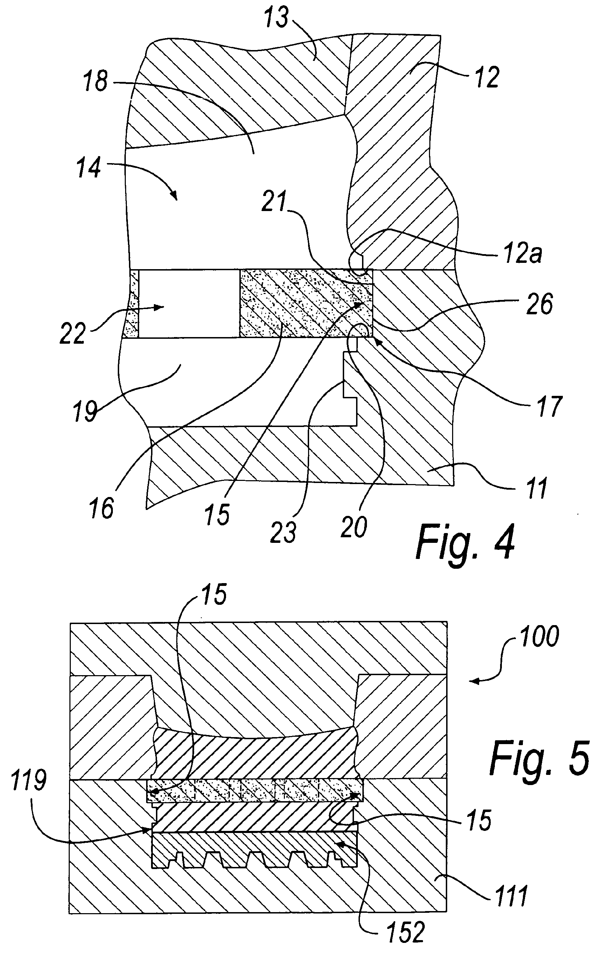

The mold 10 comprises a lower plate 11 that forms, together with lateral containment portions 12 that correspond to a closure ring that is not designated by a reference numeral and can be opened by pivoting along a longitudinal axis and with an upper closure piston 13, an impression 14; with reference to Figures 1 and 4, the impression 14 is suitable to form a multi-layer mid-sole 50.

The lower plate 11, together with the lateral containment portions 12 arranged so as to close onto said lower plate, forms undercut slots 15 along substantially mutually opposite parts of the perimeter of the impression 14.

In this embodiment, the corresponding undercut slots 15 run along the entire perimeter of the impression 14 until they degenerate into a single continuous slot.

The lower plate 11, together with the lateral containment portions 12 arranged so as to close onto said lower plate, forms an undercut slot 15 along the entire perimeter of the impression 14.

The undercut slot 15 acts as a support and lateral locking element for the outer edges of a preformed insole 16, which is obtained, for example by blanking, from a pre-carded sheet of polymeric material, such as preferably EVA.

In particular, the undercut slot 15 is formed by a step-like recess 17 that is formed on the perimetric rim of the impression 14 related to the lower plate 11.

The step-like recess 17 has a substantially flat portion 20, on which the preformed insole 16 rests, and a vertical lateral portion 21, on which the side of the preformed insole 16 abuts.

The undercut slot 15 is formed when the lateral containment portions 12 are arranged so as to close onto the lower plate 11: in practice, the lateral containment portions 12 abut against the upper surface of the lower plate 11 and have parts 12a that protrude into the profile formed by the perimetric rim of the impression 14, for example by an extent that is substantially equal to the width of the substantially flat portion 20.

The height of the vertical lateral portion 21 is equal to, or at the most smaller than, the thickness of the preformed insole 16.

The preformed insole 16 made of EVA is further spread with primer on both of its sides.

The preformed insole 16 has channels 22 that pass through its thickness.

The preformed insole 16 in practice divides the impression 14 into two chambers, respectively an upper chamber 18 and a lower chamber 19, which are mutually connected exclusively by means of the channels 22.

The lower plate 11 has, along the inner rim of the impression 14, a protrusion 23 that is suitable to form a contour with aesthetic functions for the mid-sole 12.

As mentioned, in this first embodiment the mold 10 is suitable to form the multilayer mid-sole 50 onto which a tread is to be subsequently bonded by adhesive (or over-molded or foamed).

The mid-sole 50 is molded while the mold 10 is closed and the preformed insole 16 is inserted therein.

The polymeric material that must form the multilayer mid-sole 50 is poured into the mold, at the upper chamber 19, while said mold is closed.

The polymeric material passes through the channels 22, for example from the upper chamber 19 to the lower chamber 18, filling it and then increasing in level until it also fills the upper chamber 19.

The preformed insole 16 is thus sandwiched between the layers formed by the chambers 18 and 19.

It is obviously possible to pour polymeric materials of a different type (which are conveniently mutually compatible), both in terms of composition and in terms of color, in order to obtain mutually different outer layers.

A second embodiment of the mold, designated by the reference numeral 100 and shown in Figure 5, has on the bottom of the lower plate 111, at the lower chamber 119, a receptacle for a tread 152 preformed beforehand, so that the resulting product is substantially a sole.

In a third embodiment of the mold, not shown in the figures, the lower plate is contoured so as to also form a tread simultaneously with the mid-sole.

A sole portion, such as a multilayer mid-sole 50 formed with a mold 10 as in the first, second or third embodiments described, has a protruding perimetric rim 26, which substantially coincides with the peripheral portion of the preformed sheet 16 that is accommodated in the undercut slot 15.

After extraction from the mold, the multilayer mid-sole 50, according to requirements, can be reworked in order to eliminate the protruding perimetric rim 26.

Figure 2 illustrates a sole 51 provided with the mold described above; such sole 51 is composed of a tread 52, for example made of vulcanized rubber, with which the multilayer mid-sole 50 is associated.

The multilayer mid-sole 50 is constituted by a preformed central layer 53, which corresponds to the preformed insole 16 and is therefore provided with the same channels 22 that pass through its thickness.

The central layer 53 is partially sandwiched (but in a further embodiment may be completely enclosed) between two outer layers 54 made of polymeric material, such as for example polyurethane, provided by pouring into a mold as mentioned earlier.

In particular, in this embodiment, the outer layers 54 have a thickness that decreases from the region that corresponds to the heel toward the front portion of the sole 51.

The front region of the mid-sole 50 is composed exclusively of the central layer 53.

The outer layers 54 have mutual connection portions 55 that pass through the channels 22 of the preformed insole 16 and are accordingly arranged through the thickness of the central layer 53.

In practice, the outer layers 54 are formed monolithically according to one or more operations for pouring into a mold, as described in greater detail hereinafter, and therefore the mutual connection portions 55 are monolithic with both layers 54.

The polymeric material of which the outer layers 54 are made is for example of the polyurethane type.

The channels 22 are constituted for example by four first circular holes 58 that are arranged in the heel region, in a slot 59 that is shaped like a circular sector and is arranged in the central region of the sole, and by a second hole 60 that is arranged between the first holes 58 and the slot 59.

The method for providing the mid-sole 50 in practice consists in positioning the preformed insole 16 in the open mold 10, so that it rests on the substantially flat portion 20 of the step-like recess 17 of the undercut slot 15 and so that the side abuts against the vertical lateral portion 21.

The preformed insole 16 is formed beforehand, as mentioned, by blanking from a sheet of polymeric material and then deformed in order to assume the intended thicknesses and subsequently spread with primer on both sides.

Once the preformed insole 16 has been inserted, the mold 10 is closed and the pouring of the polymeric material so as to form the outer layers 54 begins.

It is optionally possible to perform a sequential pouring of at least two different polymeric materials so as to produce outer layers that have different characteristics.

Once pouring has ended, a preset molding time is allowed to elapse and then the mold is opened and the mid-sole is extracted.

At this point it may be necessary to eliminate the protruding perimetric rim 26 (and any residual flash) by means of mechanical treatments.

In certain cases, if it is not found unsightly, it is possible to leave the protruding perimetric rim 26.

If one wishes to mold the mid-sole directly onto the tread, so as to form a sole, before inserting the preformed insole 16 it is necessary to insert in the lower plate 11 a tread manufactured earlier and optionally treated with adhesives or other treatments.

In practice it has been found that the invention thus described achieves the intended aim and objects.

In particular, the present invention provides a mold for producing shoe soles and shoe sole portions that allows to have optimum assurance of adhesion between the layers that compose said soles or sole portions and a precise relative positioning of said layers.

Further, the mold allows optimum control of the thicknesses that compose the soles or sole portions.

Moreover, the present invention provides a method for forming shoe soles and shoe sole portions that allows to increase the speed of production of said soles or sole portions with respect to known methods.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2003A000075 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A mold for providing shoe soles and shoe sole portions, comprising a lower plate (11) that forms, together with lateral containment portions (12) and with an upper closure piston (13), at least one shoe sole impression (14), said mold being **characterized in that** said lower plate (11) and said lateral containment portions (12), when arranged so as to close onto said lower plate (11), form, along substantially mutually opposite parts of the perimeter of said at least one impression (14), corresponding undercut slots (15) for supporting and locking laterally the outer edges of a preformed insole (16) obtained from a sheet of polymeric material, which is provided with channels (22) that pass through its thickness.

2. The mold according to claim 1, **characterized in that** said slots (15) are formed by a step-like recess (17) that is formed on the perimetric rim of said impression (14) related to said lower plate (11) and by parts (12a) of said lateral containment portions (12) that close onto said lower plate (11) and protrude into the profile formed by said perimetric rim, said step-like recess (17) having a substantially flat portion (20) for the resting of said preformed insole (16) and a vertical lateral abutment portion (21) for the side of said preformed insole (16).

3. The mold according to claim 2, **characterized in that** parts (12a) of said lateral containment portions (12) protrude within the profile formed by said perimetric rim by an extent that is substantially equal to the width of said substantially flat portion (20).

4. The mold according to claim 2 or 3, **characterized in that** the height of said vertical lateral portion (21) is identical to, or at the most smaller than, the thickness of said preformed insole (16).

5. The mold according to one or more of the preceding claims, **characterized in that** said corresponding undercut slots (15) run along the perimeter of said at least one impression (14) until they degenerate into a single continuous slot (15), said preformed insole (16) thus dividing said at least one impression (14) into an upper chamber (18) and a lower chamber (19) that are connected exclusively by means of said channels (22).

6. The mold according to one or more of the preceding claims, **characterized in that** said lower plate (11) has, along the inner edge of said impression (14), a protrusion (23).

7. The mold according to one or more of the preceding claims, **characterized in that** said lower plate (11) is contoured so as to form a tread simultaneously with the mid-sole.

8. The mold according to one or more of claims 1 to 6, **characterized in that** on the bottom of said lower plate (11), at said lower chamber (19), there is a receptacle for a preformed tread.

9. The mold according to one or more of the preceding claims, **characterized in that** said sheet is made of EVA.

10. A sole for shoes, **characterized in that** it is provided by means of a mold according to one or more of the preceding claims.

11. A multilayer mid-sole for shoe soles, **characterized in that** it is provided by means of a mold (10) according to one or more of claims 1 to 6, said mid-sole comprising a preformed central layer (53) that is obtained from a sheet of polymeric material, said central layer (53) being at least partially sandwiched between two outer layers (54) made of polymeric material and provided by pouring into said mold (10), said outer layers (54) having mutual connection portions (55) that are arranged so as to pass through corresponding channels (22) formed through the thickness of said central layer (53).

12. The sole for shoes, **characterized in that** it comprises a preformed tread and a multilayer mid-sole according to claim 11, provided directly on said preformed tread.

13. A method for providing shoe soles and shoe sole portions, comprising the steps of:
-- blanking an insole from a pre-carded sheet of polymeric material,
-- deforming said insole in order to assume the intended thicknesses,
-- spreading primer onto both sides of said insole,
-- positioning said insole (16) thus deformed in a mold (10), according to one or more of claims 1 to 8, so that it rests on said substantially flat portion (20) of said step-like recess (17) of said undercut slot (15), and so that the side abuts against said vertical lateral portion (21),
-- closing said mold (10) and starting the pouring of at least one polymeric material,
-- once pouring has ended, waiting for a preset molding time,
-- opening said mold (10) and extracting the molded product.

14. The method according to claim 13, **characterized in that** it comprises a step for inserting a preformed tread in said lower plate (11) of said mold (10).

15. The method according to one of claims 13 or 14, **characterized in that** it comprises a step for reworking the molded product in order to eliminate by mechanical processes said protruding perimetric rim (26) and any residual flash.

16. The method according to one of claims 13 to 15, **characterized in that** the polymeric material used for pouring inside the mold (10) is of the polyurethane type.

17. The multilayer mid-sole for soles of shoes, particularly but not exclusively useful in heavy shoes such as safety shoes, mountain boots and the like, **characterized in that** it comprises a preformed central layer (53) obtained from a sheet of polymeric material, said central layer (53) being at least partially sandwiched between two outer layers (54) made of polymeric material and provided by pouring into a mold, said outer layers (54) having mutual connection portions (55) that are arranged so as to pass through corresponding channels (22) formed through the thickness of said central layer (53).

18. The multilayer mid-sole according to claim 17, **characterized in that** said outer layers (54) have a thickness that decreases from the region that corresponds to the heel toward the front portion of the mid-sole (50).

19. The multilayer mid-sole according to claim 18, **characterized in that** the front region of said mid-sole (50) is composed exclusively of said central layer (53).

20. The multilayer mid-sole according to one or more of claims 12 to 14, **characterized in that** said channels (22) comprise four first circular holes (58) that are arranged on the heel region, in a slot (59) that is shaped like a circular sector and is arranged in the central region of said mid-sole (50) and in a second hole (60) that is arranged between said first holes (58) and said slot (59).

21. The multilayer mid-sole according to one or more of claims 17 to 20, **characterized in that** said sheet from which said central preformed layer is obtained is made of EVA.

22. The multilayer mid-sole according to one or more of claims 17 to 21, **characterized in that** the polymeric material that forms said outer layers (54) is of the polyurethane type.

23. A shoe, **characterized in that** it comprises a multilayer mid-sole according to one or more of the preceding claims.
